# EUROPEAN PATENT SPECIFICATION

(11) **EP 3 755 897 B1**
(45) Date of publication and mention of the grant of the patent: **01.05.2024**
(21) Application number: 18709381.0
(22) Date of filing: 23.02.2018
(51) Int. Cl.: F02D 41/40, F02D 41/00, F02D 43/04, F02D 37/02, F02D 35/02

(54) **METHOD OF OPERATING PISTON ENGINE AND PISTON ENGINE**
VERFAHREN ZUM BETRIEB EINES KOLBENMOTORS SOWIE KOLBENMOTOR
PROCÉDÉ D'ACTIONNEMENT DE MOTEUR À PISTONS ET MOTEUR À PISTONS ASSOCIÉ

(43) Date of publication of application: 30.12.2020
(73) Proprietor: Wärtsilä Finland Oy, 65170 Vaasa (FI)
(72) Inventor: POUTTU, Outi, 65100 Vaasa (FI); ISAKSSON, Sten, 65100 Vaasa (FI); TUOMAINEN, Antti, 65100 Vaasa (FI); VARJOSAARI, Mika, 65100 Vaasa (FI); ZUBIN, Luca, 34018 Trieste (IT)
(74) Representative: Berggren Oy
(86) International application number: PCT/FI2018/050134
(87) International publication number: WO 2019/162557

(56) References cited:
- WO-A1-2008/091310
- US-A- 5 740 780
- US-A1- 2013 340 716
- US-B1- 7 231 906

## Description

### Technical field of the invention

The present invention relates to a method of operating piston engine in accordance with claim 1. The invention also concerns a piston engine as defined in the other independent claim.

### Background of the invention

The requirements set for piston engines in terms of fuel efficiency, emissions, and performance are becoming stricter and stricter. At the same time, the ability to operate engines using different fuels has become a more desired property. However, the type and quality of the fuel can have a significant effect on the performance and emissions of an engine. In some cases, changes in the quality of the fuel can lead to a situation, where an engine cannot meet the required emission limits or the promised efficiency, or where exhaust temperatures exceed allowed limits. There is thus a need for a method, which can adjust the operation of a piston engine to take into account changes in the quality of fuel.

US 7 231 906 B1 describes a method for simultaneous exhaust gas recirculation and individual cylinder combustion phasing control in a multi-cylinder internal combustion engine, wherein either the mass fraction fuel burned of each cylinder is used to control each cylinder individually or for all cylinders in combination.

### Summary of the invention

An object of the present invention is to provide an improved method of operating a piston engine. The characterizing features of the method according to the invention are given in claim 1. Another object of the invention is to provide an improved piston engine. The characterizing features of the engine according to the invention are given in the other independent claim.

The method according to the invention comprises the steps of monitoring pressure in a plurality of cylinders of the engine; based on the monitoring of cylinder pressure, determining the value of a first variable, which represents the development of cumulative heat release in a single cylinder of the engine during one or more engine cycles up to a first reference point; comparing the value of the first variable to a predetermined first target value or target range, which represents desired development of the cumulative heat release in the single cylinder up to the first reference point; on the basis of the comparison, adjusting a first engine parameter, wherein the first engine parameter is a cylinder specific parameter affecting start of combustion in the single cylinder; simultaneously with the determining of the value of the first variable, based on the monitoring of cylinder pressure determining the value of a second variable, which represents the average development of cumulative heat release in a plurality of cylinders of the engine during one or more engine cycles up to a second reference point, the second reference point being located at a later phase of combustion than the first reference point; comparing the value of the second variable to a predetermined second target value or target range, which represents desired average development of the cumulative heat release in the plurality of cylinders up to the second reference point; and on the basis of the comparison, adjusting a second engine parameter, which affects combustion in the plurality of cylinders, wherein the second engine parameter is the pressure of intake air.

In the method according to the invention, both an early phase of the combustion and a later phase of the combustion are monitored and two different engine parameters are controlled. By adjusting the first engine parameter, the start of combustion can be individually controlled in each cylinder. This allows quick adjustments of the combustion process. The adjustment of the second engine parameter allows slower control of the combustion and affects a later phase of the combustion. By the combination of the adjustment of the two engine parameters, for instance variations in the fuel quality can be effectively compensated.

The piston engine according to the invention comprises means for determining cumulative heat release in a plurality of the cylinders of the engine during combustion and a control unit, wherein the control unit is configured to operate the engine in accordance with the method defined above.

According to a further teaching, the first reference point is selected so that the value of the first variable describes an early phase of combustion.

According to an embodiment of the invention, the first engine parameter is the timing of pilot fuel injection. Alternatively, the first engine parameter can be the injection amount of pilot fuel. Both alternatives allow cylinder specific adjustment of the combustion process and affect particularly the early part of the combustion. The timing of pilot fuel injection affects especially the start of combustion.

According to an embodiment of the invention, the amount of the pilot fuel is adjusted by controlling the duration of pilot fuel injection and/or by controlling the injection pressure of the pilot fuel.

According to an embodiment of the invention, the first engine parameter is intake valve timing.

According to an embodiment of the invention, the first engine parameter is spark timing. In spark ignited engines, the spark timing is an effective way of adjusting the ignition timing.

According to an embodiment of the invention, the method comprises the steps of determining the average injection amount of pilot fuel of at least three earlier engine cycles, comparing the average injection amount to a predetermined upper limit, and in case the average injection amount has not reached the upper limit, adjusting the injection amount of the pilot fuel as the first engine parameter. The injection amount can thus be used as the primary way of controlling the early part of combustion, but by setting an upper limit for the injection amount, excessive emissions can be avoided.

According to an embodiment of the invention, in case the average injection amount has reached the upper limit, the injection timing of the pilot fuel and/or cylinder compression temperature is adjusted as the first engine parameter.

According to an embodiment of the invention, the compression temperature is adjusted by means of exhaust gas recirculation.

According to an embodiment of the invention, the compression temperature is adjusted by adjusting intake valve closing timing.

According to an embodiment of the invention, the first variable is the crank angle at which a predetermined first cumulative amount of released heat is reached.

According to an embodiment of the invention, the predetermined first cumulative amount of released heat is 2-40 percent of the total amount of heat released during one engine cycle in the single cylinder.

According to an embodiment of the invention, the first variable is a heat release value representing cumulative heat release up to a first predetermined crank angle in the single cylinder.

According to the invention, the second engine parameter is the pressure of intake air. By controlling the intake air pressure, combustion in a plurality of cylinders is affected.

According to an embodiment of the invention, the second variable is the average crank angle, at which a predetermined second cumulative amount of released heat is reached.

According to an embodiment of the invention, the predetermined second cumulative amount of released heat is 41-95 percent of the total amount of heat released during one engine cycle.

According to an embodiment of the invention, the predetermined second cumulative amount of released heat is 50-95 percent of the total amount of heat released during one engine cycle.

According to a further teaching, the predetermined second cumulative amount of released heat is at least 10 percentage units greater than the predetermined first cumulative amount of released heat.

According to a further teaching, the predetermined second cumulative amount of released heat is at least 20 percentage units greater than the predetermined first cumulative amount of released heat.

According to an embodiment of the invention, the second variable is a heat release value representing average cumulative heat release up to a predetermined second crank angle.

According to an embodiment of the invention, the second variable represents the average development of cumulative heat release during several engine cycles. By monitoring the heat release over several engine cycles, slow changes in the combustion can be better taken into the account.

According to an embodiment of the invention, the first variable represents the development of cumulative heat release during a single engine cycle. This allows quick adjustments in the early part of the combustion process.

According to an embodiment of the invention, the method comprises the steps of calculating the value of a third variable, which is the average of the values of the first variables of at least three earlier engine cycles, comparing the value of the third variable to a predetermined third target value or target range, which represents desired average development of the cumulative heat release up to the first reference point, and on the basis of the comparison, adjusting a third engine parameter, which is different than the first engine parameter. This allows further adjustment of the early part of combustion.

According to a further teaching, the third engine parameter is different than the second engine parameter.

According to a further teaching, the third engine parameter is the amount of recirculated exhaust gas and/or the timing of pilot fuel injection.

According to a further teaching, the method comprises the steps of determining the average value of the first variables of all cylinders of the engine, comparing the value of the first variable of a single cylinder of the engine to the average value of the first variables, and in case the value of the first variable of the single cylinder is not within predetermined limits from the average value of the first variables, adjusting a fourth engine parameter, which is different than the first engine parameter. Differences in the combustion processes of different cylinders can thus be reduced.

According to an embodiment of the invention, the fourth engine parameter is intake valve timing.

According to an embodiment of the invention, the method comprises the steps of determining the difference between the value of the first variable and the value of the second variable, comparing the difference to a predetermined target value or target range, and in case the difference is not in a desired range, adjusting a fifth engine parameter.

According to an embodiment of the invention, the fifth engine parameter is different than the first engine parameter.

### Brief description of the drawings

Embodiments of the invention are described below in more detail with reference to the accompanying drawings, in which
Fig. 1 shows schematically a piston engine,
Fig. 2 shows schematically one cylinder of a piston engine,
Fig. 3 shows as a flowchart a method according to an embodiment of the invention,
Fig. 4 shows as a flowchart part of a method according to an embodiment of the invention,
Fig. 5 shows as a flowchart part of a method according to another embodiment of the invention,
Fig. 6 shows as a flowchart part of a method according to still another embodiment of the invention,
Fig. 7 shows an example of the selection of reference points in a method according to the invention,
Fig. 8 shows another example of the selection of the reference points, and
Fig. 9 shows as a flowchart part of a method according to still another embodiment of the invention.

### Description of embodiments of the invention

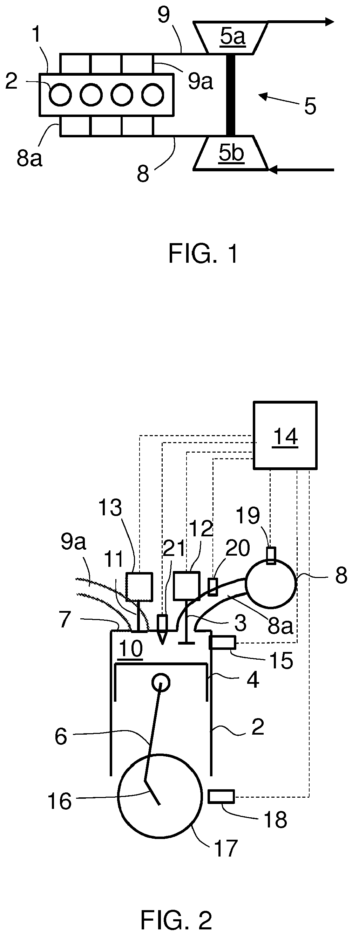

Figure 1 shows schematically a piston engine 1. The engine 1 can be a large internal combustion engine, such as a main or an auxiliary engine of a ship or an engine that is used at a power plant for producing electricity. The expression "large internal combustion engine" refers to an engine of which cylinder bore is at least 150 mm. The engine 1 is a four-stroke engine 1. The engine 1 comprises a plurality of cylinders 2. Four cylinders 2 are shown in figure 1, but the engine 1 can comprise any reasonable number of cylinders 2. The engine 1 can be, for instance, an in-line engine, as shown in figure 1, or a V-engine.

The engine can be, for instance, a gas engine, a dual-fuel engine or a multi-fuel engine. A dual-fuel engine or a multi-fuel engine can be selectively operated using two or more different main fuels, for instance a liquid main fuel and a gaseous main fuel. In a gas engine or in a dual-fuel or multi-fuel engine that is operated in a gas mode, a gaseous main fuel can be ignited using for example liquid pilot fuel or spark plugs for triggering combustion of the gaseous main fuel.

The engine 1 of figure 1 is provided with a turbocharger 5, which comprises a turbine 5a and a compressor 5b. The engine 1 could also be provided with two or more turbochargers. The turbochargers could be arranged in series and/or in parallel. Intake air of the engine is pressurized by the compressor 5b of the turbocharger 5 and introduced via an intake duct 8 into the cylinders 2 of the engine 1. Exhaust gas is introduced via an exhaust duct 9 into the turbine 5a of the turbocharger 5. The intake duct 8 comprises branches 8a that are connected to the cylinders 2. Similarly, the exhaust duct 9 comprises branches 9a that are connected to the cylinders 2. The intake duct 8 on the downstream side of the compressor 5b of the turbocharger 5 can be called as an intake or inlet receiver or intake or inlet manifold.

Figure 2 shows schematically one cylinder 2 of a piston engine according to an embodiment of the invention. The cylinder 2 shown in figure 2 belongs to a gas engine or a dual-fuel or multi-fuel engine that can be operated in a gas mode and which is provided with pilot fuel injection system. However, apart from the description of the pilot fuel injection system, the features discussed below could be present also in other types of engines.

Each cylinder 2 of the engine 1 is provided with a piston 4, which is configured to move in a reciprocating manner within the cylinder 2. The piston 4 is connected via a connecting rod 6 to a crankshaft 16. A flywheel 17 is attached to one end of the crankshaft 16. Together with the walls of the cylinder 2 and a cylinder head 7, the piston 4 delimits a combustion chamber 10. Each cylinder 2 of the engine 1 is provided with at least one intake valve 3. According to an embodiment of the invention, each cylinder 2 is provided with two intake valves 3. The intake valves 3 are used for opening and closing fluid communication between the intake duct (intake receiver) 8 and the combustion chamber 10. Each cylinder 2 of the engine 1 is provided with at least one exhaust valve 11. According to an embodiment of the invention, each cylinder 2 is provided with two exhaust valves 11. The exhaust valves 11 are used for opening and closing fluid communication between the combustion chamber 10 and the exhaust duct 9.

The intake valves 3 are connected to intake valve actuating means 12. The intake valve actuating means 12 are used for opening and closing the intake valves 12. The intake valve actuating means 12 can be configured to allow variable intake valve timing. The crank angle at which the intake valves 3 are opened and/or closed can thus be varied. The intake valve actuating means 12 can be implemented in many alternative ways. The intake valve actuating means 12 can comprise an electrical, hydraulic or mechanical actuator. The intake valve actuating means 12 could also be any combination of electrical, hydraulic and/or mechanical means. For instance, the intake valves 3 can be opened by means of a camshaft. The closing force for closing the intake valves 3 can be created by means of one or more springs, such as helical springs and/or air springs. The closing of the intake valves 3 can be delayed by means of a hydraulic system. Alternatively, both the opening and closing timing could be determined by means of an electrical actuator, such as a solenoid. Alternatively, the intake valves 3 could be both opened and closed hydraulically. The intake valve actuating means 12 are connected to a control unit 14, which is configured to transmit a control signal to the intake valve actuating means 12 for determining the opening and/or closing timing of the intake valves 3.

In the embodiment of figure 2, the exhaust valves 11 are connected to similar actuating means 13 as the intake valves 3. However, the exhaust valves 11 could also be provided with different actuating means. For instance, it is not necessary that the actuating means 13 of the exhaust valves 11 allow variable valve timing. In the embodiment of figure 2, also the exhaust valve actuating means 13 are connected to the control 14 unit which is configured to transmit a control signal to the exhaust valve actuating means 13 for determining the opening and/or closing timing of the exhaust valves 11. Instead of the arrangements described above, both the intake valves 3 and the exhaust valves 11 could be cam-controlled. The valve timings could be either variable or fixed.

The engine of figure 2 can be operated in a gas mode. Each cylinder 2 of the engine is provided with a gas admission valve 20. Via the gas admission valves 20, gaseous main fuel can be introduced into the cylinders 2 of the engine 1. The gaseous fuel can be, for instance, natural gas. In the embodiment of figure 2, the gas admission valve 20 is arranged to introduce the gaseous main fuel between the intake receiver 8 and the intake valves 3. The gaseous fuel is mixed with the intake air during the intake stroke and the compression stroke to form a homogenous mixture. Each cylinder 2 of the engine could also be provided with an additional gas admission valve for introducing part of the gaseous main fuel into a prechamber.

In the embodiment of figure 2, each cylinder 2 of the engine 1 is provided with a pilot fuel injector 21. Via the pilot fuel injector 21, liquid pilot fuel can be injected into the cylinder 2. The pilot fuel is injected directly into the combustion chamber 10. The ignition of the pilot fuel triggers combustion of the gaseous main fuel. The pilot fuel can be, for instance, light fuel oil. Instead of pilot fuel injection, each cylinder 2 of the engine 1 could be provided with a spark plug for controlling ignition timing. The engine could also be provided with an additional fuel injection system for injecting liquid main fuel into the cylinders 2 when operated in a liquid fuel mode.

The gas admission valves 20 and the pilot fuel injectors 21 are connected to the control unit 14. The injection timings and durations of both the pilot fuel injection and the main fuel injection can thus be individually controlled in each cylinder 2 of the engine 1.

Each cylinder 2 of the engine 1 is provided with a cylinder pressure sensor 15. The cylinder pressure sensor 15 is arranged to measure pressure in the cylinder 2. The engine 1 is provided with data processing means, such as a control unit 14, which receives measurement data from the cylinder pressure sensors 15. The engine 1 further comprises a crank angle sensor 18 or other means for determining the angular position of the crankshaft 16. In the embodiment of figure 2, the crank angle sensor 18 monitors the angular position of the flywheel 17. On the basis of the angular position of the flywheel 17, the position of the piston 4 in each cylinder 2 can be determined. In addition to the pressure measurement data, the control unit 14 also receives measurement data from the crank angle sensor 18. The cylinder pressure can thus be determined in respect of crank angle.

The engine 1 is further provided with intake air pressure sensor 19. The intake air pressure sensor 19 monitors the pressure of the intake air. The intake air pressure sensor 19 is connected to the control unit 14, which receives measurement data from the intake air pressure sensor 19.

The control unit 14 can be arranged to receive measurement data from many other sensors and to control different devices. For instance, the control unit 14 can monitor and control intake air temperature, monitor and control pilot fuel injection pressure, monitor exhaust gas temperature, and/or control intake air pressure.

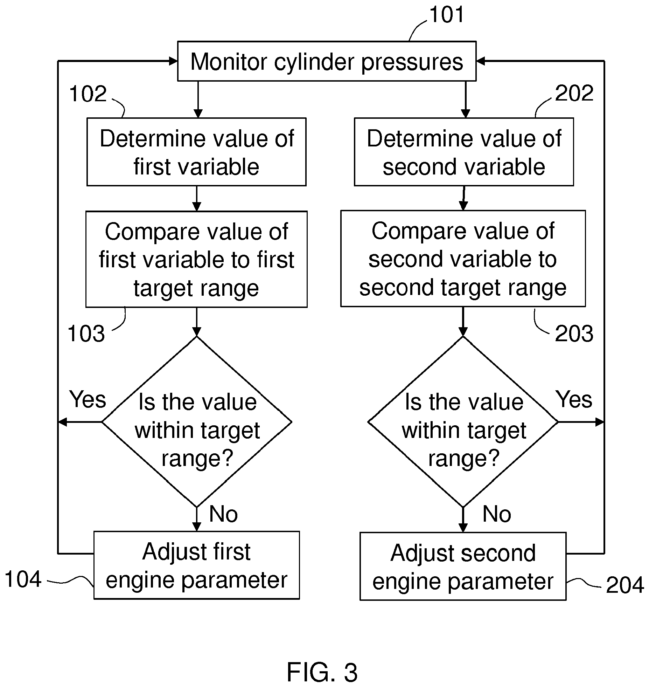

Figure 3 shows as a flowchart a method according to an embodiment of the invention. In the method according to the invention, pressure in a plurality of cylinders 2 of the engine 1 is monitored 101. Preferably, the pressures of all cylinders 2 of the engine 1 are monitored. The cylinder pressures can be monitored by means of the pressure sensors 15. The cylinder pressure in each cylinder 2 is measured several times at least during each power stroke.

On the basis of the cylinder pressure measurements, the value of a first variable CA₁, HR₁ is determined 102. The first variable CA₁, HR₁ represents the development of cumulative heat release in a single cylinder 2 of the engine 1 during one or more engine cycles up to a first reference point R₁. The first reference point R₁ is a predetermined value, which is located at an early phase of the combustion. The value of the first variable CA₁, HR₁ thus describes an early phase of the combustion.

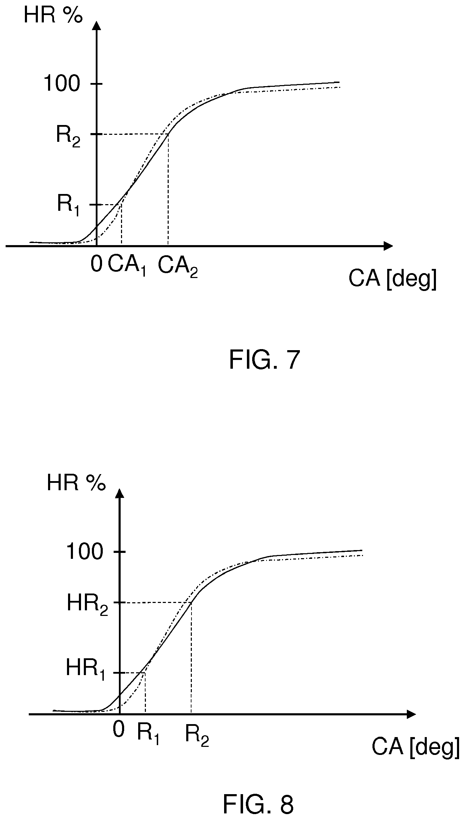

Figures 7 and 8 show two examples of the selection of the first reference point R₁ and the determination of the value of the first variable CA₁, HR₁. In both figures the curve with a dashed line shows an example of the development of the cumulative heat release in a single cylinder 2 of the engine 1 as the function of crank angle. The curve can represent either a single engine cycle or the average of a plurality of engine cycles. The horizontal axis represents the crank angle and "0" refers to top dead center, i.e. the beginning of the power stroke.

In figure 7, the first reference point R₁ is a first cumulative amount of released heat, i.e. a predetermined heat release percentage. The first cumulative amount of released heat could be for example in the range of 2-40 percent of the total heat release during one engine cycle. The value of the first variable is the crank angle CA₁ at which the predetermined first cumulative amount of released heat is reached in the single cylinder 2 during a single engine cycle, or the average crank angle at which the predetermined first cumulative amount of released heat is reached in the single cylinder 2 during a plurality of engine cycles.

Alternatively, the first reference point R₁ can be a predetermined crank angle, as shown in figure 8. The first variable is thus a heat release value HR₁ representing cumulative heat release up to a first predetermined crank angle R₁.

Referring again to figure 3, the value of the first variable CA₁, HR₁ is compared to a predetermined first target value or target range 103. The first target range represents desired development of the cumulative heat release in the single cylinder 2 up to the first reference point R₁. If the first reference point R₁ is a certain crank angle, as shown in figure 8, the cumulative amount of released heat HR₁ at that crank angle is thus compared to a desired heat release value or range. If the first reference point R₁ is a certain heat release percentage, as shown in figure 7, the crank angle CA₁ at which the predetermined heat release amount is reached is compared to a desired crank angle or crank angle range.

On the basis of the comparison, a first engine parameter is adjusted 104. The first engine parameter is a cylinder specific parameter affecting start of combustion in the single cylinder 2. Adjustment of the parameter does thus not affect the combustion in the other cylinders 2 of the engine 1. The first engine parameter is changed only in case the value of the first variable CA₁, HR₁ is not within a desired range. For instance, if the value of the first variable CA₁, HR₁ is outside the first target range or there is a certain predetermined deviation between the value of the first variable CA₁, HR₁ and the first target value, the first engine parameter is changed. If the value CA₁, HR₁ is within the desired range, the prevailing value of the first engine parameter is maintained. The monitoring of cylinder pressures continues.

The determination of the value of the first variable CA₁, HR₁ 102, the comparison step 103, and the adjustment of the first engine parameter 104 can be done simultaneously for a plurality of cylinders 2 or for all cylinders 2 of the engine 1. The first engine parameter can thus be adjusted individually in each cylinder 2 of the engine 1.

Simultaneously with the determination of the value of the first variable CA₁, HR₁, the value of a second variable CA₂, HR₂ is determined 202. The second variable CA₂, HR₂ represents the average development of cumulative heat release in a plurality of cylinders 2 during one or more engine cycles up to a second reference point R₂. In figures 7 and 8, the curve with the solid line shows an example of the average development of cumulative heat release in a plurality of cylinders 2. The curve can represent either a single engine cycle or the average of a plurality of engine cycles. The second reference point R₂ is located at a later phase of combustion than the first reference point R₁. The second variable CA₂, HR₂ thus describes a late phase of combustion. The second variable CA₂, HR₂ can be based on the heat release in all the cylinders 2 of the engine. Alternatively, the second variable CA₂, HR₂ could be based for instance on the heat release in the cylinders 2 of one bank of a V-engine.

Like the first reference point R₁, also the second reference point R₂ can be a certain heat release percentage, as shown in figure 7. The value of the second variable can thus be the average crank angle CA₂, at which a predetermined second cumulative amount of released heat is reached in the plurality of cylinders 2. The predetermined second cumulative amount of released heat could be for example in the range of 41-95 percent of the total heat release during one engine cycle, or in the range of 50-95 percent of the total heat release during one engine cycle. The predetermined second cumulative amount of released heat should be at least 10 percentage units greater than the predetermined first cumulative amount of released heat. The predetermined second cumulative amount of released heat could optionally be at least 20 percentage units greater than the predetermined first cumulative amount of released heat. As an example, if the predetermined first cumulative amount of released heat is 40 percent of the total heat release during one engine cycle, the predetermined second cumulative amount of released heat should be at least 50 percent of the total heat release during one engine cycle.

Alternatively, the second reference point R₂ can be a certain crank angle, as shown in figure 8. The second variable is thus a heat release value HR₂ representing average cumulative heat release in a plurality of cylinders 2 up to a second predetermined crank angle R₂.

The second variable can represent the development of cumulative heat release during several engine cycles.

The value of the second variable CA₂, HR₂ is compared to a predetermined second target value or target range 203. The second target value or target range represents desired average development of the cumulative heat release in the plurality of cylinders 2 up to the second reference point R₂.

Based on the comparison, a second engine parameter is adjusted 204. The second engine parameter affects combustion in the plurality of cylinders 2. The second engine parameter can thus affect the combustion in all cylinders 2 of the engine or for example in the cylinders of one bank in case of a V-engine. The second engine parameter is the pressure of the intake air. The pressure of the intake air can be adjusted for example by controlling the operation of one or more turbochargers 5.

The engine 1 is operated with a closed-loop control. The cylinder pressures are thus continuously monitored, and both the first engine parameter and the second engine parameter are adjusted as long as the first variable and the second variable are outside the desired ranges.

There are various alternatives for what can be used as the first engine parameter. The first engine parameter can be, for instance, the timing of pilot fuel injection, the injection amount of pilot fuel, intake valve timing or spark timing. In case the amount of pilot fuel injection is adjusted, the amount can be controlled by controlling the duration of pilot fuel injection and/or by controlling the injection pressure of pilot fuel. The pilot fuel injection is adjusted individually in each cylinder 2 of the engine 1.

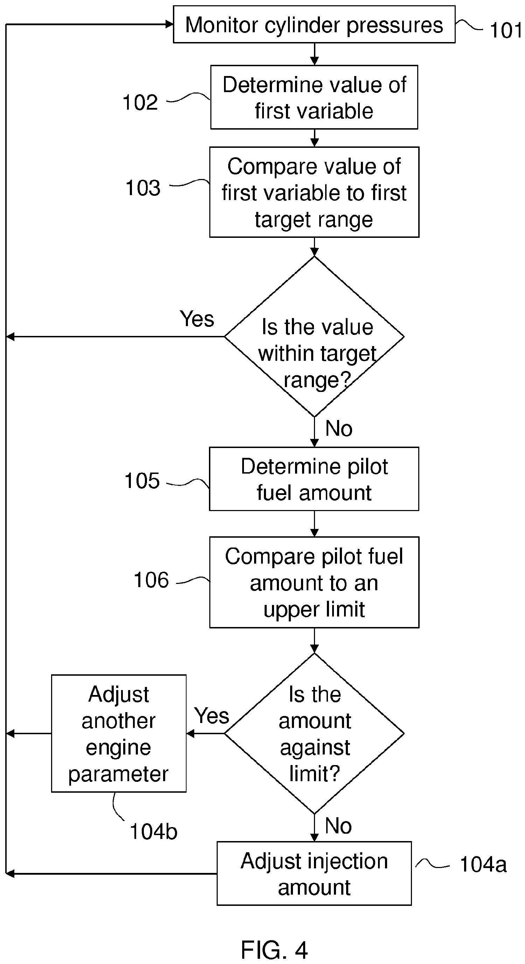

It is also possible that the first engine parameter to be adjusted is different in different situations. The flowchart of figure 4 shows an example of using two different parameters as the first engine parameter. The flowchart shows only part of the method according to the invention, i.e. the adjustment of the first engine parameter. The second engine parameter can be adjusted in the way described above. In the embodiment of figure 4, the value of the first variable is determined 102 and compared to a target value or target range 103 in the same way as in the embodiment of figure 3. In case adjustment of the first variable is needed, the amount of pilot fuel injected during one or more earlier engine cycles is determined 105. The pilot fuel amount to be determined can be an average injection amount of three or more earlier engine cycles. The actual (average) injection amount is compared to a predetermined upper limit 106. In case the (average) injection amount has not reached the predetermined upper limit, the injection amount is adjusted as the first engine parameter 104a. If the injection amount has already reached the upper limit, another parameter is adjusted as the first engine parameter 104b. This prevents excessive emissions due to excessive pilot fuel injection amounts. The other parameter can be, for instance, the injection timing of the pilot fuel or cylinder compression temperature. Alternatively, both the injection timing and the compression temperature can be adjusted. The expression "compression temperature" refers to the cylinder temperature during the compression stroke. The temperature varies during the compression stroke, and therefore the compression temperature can be defined as an average temperature over the compression stroke or as a momentary temperature at a predetermined crank angle during the compression stroke. The compression temperature can be adjusted for example by controlling exhaust gas recirculation (EGR) and/or by controlling the closing timing of intake valves. The engine can be provided with an internal EGR system, where exhaust gas flow from the exhaust duct 9 back into the combustion chamber 10 can be individually controlled in each cylinder 2 of the engine. The steps of the method can be carried out also in a different order. For instance, the actual pilot fuel amount can be determined simultaneously with the determination of the value of the first variable.

As an example, comparison of the value of the first variable and the first target value or target range can show that the heat release in the early part of combustion is too slow. A certain heat release percentage is thus reached at a later crank angle than desired, or at a certain crank angle the cumulative heat release percentage is too low. A correcting action can be increasing of the amount of pilot fuel injection. The amount of the pilot fuel injection can be increased in steps and monitoring of the cylinder pressure is continued. If the injection amount reaches an upper limit and the heat release rate is still too low, the injection timing is advanced until the value of the first variable is within acceptable range.

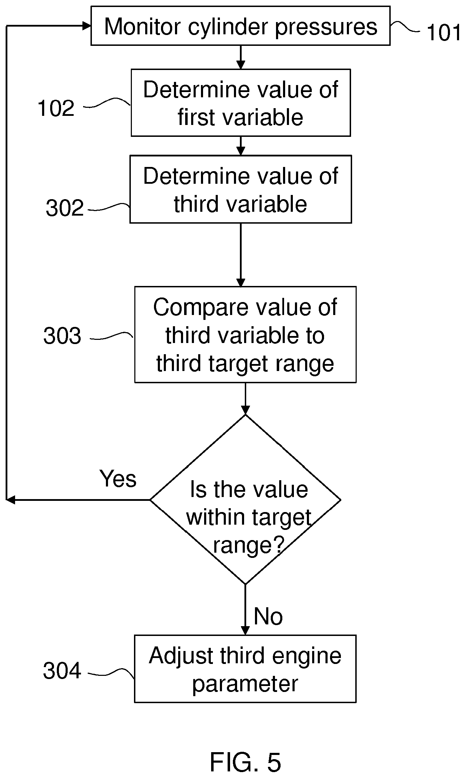

Figure 5 shows part of a method according to another embodiment of the invention. In the embodiment of figure 3, the value of a third variable is determined 302. The first variable can be determined and the first engine parameter adjusted in the same way as in the embodiment of figure 3 or figure 4. Also the second variable can be determined and the second engine parameter adjusted in the same way as in the embodiment of figure 3. The value of the third variable is determined on the basis of the value of the first variable. In this case, the value of the first variable is based on a single engine cycle. The third variable is the average of the values of the first variables of at least three earlier engine cycles. The value of the third variable is compared to a predetermined third target value or target range 303. The third target value or target range represents desired average development of the cumulative heat release in a single cylinder 2 of the engine 1 up to the first reference point R₁. On the basis of the comparison, a third engine parameter is adjusted 304. The third engine parameter is different from the first engine parameter. Preferably the third engine parameter is also different from the second engine parameter. If the value of the third variable is not within the third target range or the deviation between the value of the third variable and the target value exceeds a predetermined limit, the third engine parameter is changed. The third engine parameter can be adjusted for example by controlling the amount of recirculated exhaust gas and/or by controlling the timing of pilot fuel injection.

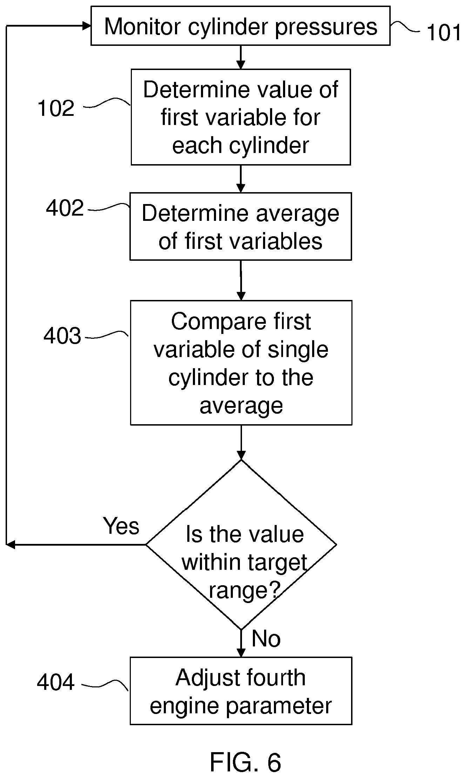

Figure 6 shows part of a method according to still another embodiment of the invention. Compared to any of the embodiments shown in figures 3 to 5, the method of figure 6 comprises an additional step of determining the average value of the first variables CA₁, HR₁ of a plurality of cylinders 2 402. The value of the first variable of a single cylinder 2 is then compared to the average value 403. In case the value of the first variable CA₁, HR₁ of the single cylinder 2 is not within predetermined limits from the average value, a fourth engine parameter is adjusted 404. The fourth engine parameter is different than the first engine parameter. The fourth engine parameter is preferably also different from the second engine parameter and/or the third engine parameter. Also the fourth engine parameter is a cylinder specific parameter, which affects combustion in the single cylinder. The fourth parameter can be, for instance, intake valve timing. The fourth parameter is adjusted individually for each cylinder 2.

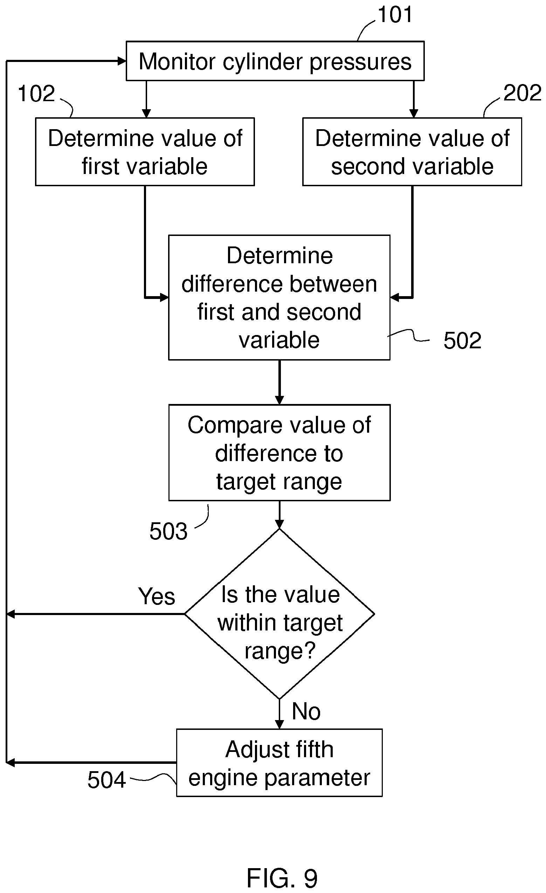

Figure 9 shows part of a method according to still another embodiment of the invention. Also this embodiment can be combined with the other embodiments. In the embodiment of figure 9, the difference between the values of the first variable is determined. The value is compared to a target value or target range. If the value is within the target range or within predetermined limits from a target value, monitoring of the cylinder pressures is continued without adjusting engine parameters. In case the value is outside the target range, a fifth engine parameter is adjusted. The fifth engine parameter can be, for instance, charge air pressure, charge air temperature or intake valve timing.

It will be appreciated by a person skilled in the art that the invention is not limited to the embodiments described above, but may vary within the scope of the appended claims. For instance, the features of the different embodiments can be combined.

## Claims

1. A method of operating a piston engine (1), the method comprising the steps of
- monitoring pressure in a plurality of cylinders (2) of the engine (1) (101),
- based on the monitoring of cylinder pressure (101), determining the value of a first variable (CA₁, HR₁), which represents the development of cumulative heat release in a single cylinder (2) of the engine (1) during one or more engine cycles up to a first reference point (R₁) (102),
- comparing the value of the first variable (CA₁, HR₁) to a predetermined first target value or target range, which represents desired development of the cumulative heat release in the single cylinder (2) up to the first reference point (R₁) (103),
- on the basis of the comparison, adjusting a first engine parameter, wherein the first engine parameter is a cylinder specific parameter affecting start of combustion in the single cylinder (2) (104, 104a, 104b),
- simultaneously with the determining of the value of the first variable (CA₁, HR₁), based on the monitoring of cylinder pressure (101), determining the value of a second variable (CA₂, HR₂), which represents the average development of cumulative heat release in a plurality of cylinders (2) of the engine (1) during one or more engine cycles up to a second reference point (R₂), the second reference point (R₂) being located at a later phase of combustion than the first reference point (R₁) (202),
- comparing the value of the second variable (CA₂, HR₂) to a predetermined second target value or target range, which represents desired average development of the cumulative heat release in the plurality of cylinders (2) up to the second reference point (R₂) (203), and
- on the basis of the comparison, adjusting a second engine parameter, which affects combustion in the plurality of cylinders (2) (204),
wherein the second engine parameter is the pressure of intake air.

2. A method according to claim 1, wherein the first engine parameter is the timing of pilot fuel injection, the injection amount of pilot fuel, intake valve timing or spark timing.

3. A method according to claim 1, wherein the method comprises the steps of
- determining the average injection amount of pilot fuel of at least three earlier engine cycles (105),
- comparing the average injection amount to a predetermined upper limit (106), and
- in case the average injection amount has not reached the upper limit, adjusting the injection amount of the pilot fuel as the first engine parameter (104a).

4. A method according to claim 3, wherein in case the average injection amount has reached the upper limit, the injection timing of the pilot fuel and/or cylinder compression temperature is adjusted as the first engine parameter (104b).

5. A method according to claim 4, wherein the compression temperature is adjusted by means of exhaust gas recirculation and/or by adjusting intake valve closing timing.

6. A method according to any of the preceding claims, wherein the first variable is the crank angle (CA₁), at which a predetermined first cumulative amount of released heat is reached or a heat release value (HR₁) representing cumulative heat release up to a first predetermined crank angle in the single cylinder (2).

7. A method according to any of the preceding claims, wherein the second variable is the average crank angle (CA₂), at which a predetermined second cumulative amount of released heat is reached or a heat release value (HR₂) representing average cumulative heat release up to a predetermined second crank angle.

8. A method according to any of the preceding claims, wherein the second variable represents the average development of cumulative heat release during several engine cycles.

9. A method according to any of the preceding claims, wherein the first variable represents the development of cumulative heat release during a single engine cycle.

10. A method according to claim 9, wherein the method comprises the steps of
- calculating the value of a third variable, which is the average of the values of the first variables (CA₁, HR₁) of at least three earlier engine cycles (302),
- comparing the value of the third variable to a predetermined third target value or target range, which represents desired average development of the cumulative heat release up to the first reference point (R₁) (303), and
- on the basis of the comparison, adjusting a third engine parameter, which is different than the first engine parameter (304).

11. A method according to claim 10, wherein the third engine parameter is different than the second engine parameter.

12. A method according to any of the preceding claims, wherein the method comprises the steps of
- determining the average value of the first variables (CA₁, HR₁) of all cylinders (2) of the engine (1) (402),
- comparing the value of the first variable (CA₁, HR₁) of a single cylinder (2) of the engine (1) to the average value of the first variables (403), and
- in case the value of the first variable (CA₁, HR₁) of the single cylinder (2) is not within predetermined limits from the average value of the first variables (CA₁, HR₁), adjusting a fourth engine parameter, which is different than the first engine parameter (404).

13. A method according to any of the preceding claims, wherein the method comprises the steps of
- determining the difference between the value of the first variable (CA₁, HR₁) and the value of the second variable (CA₂, HR₂) (502),
- comparing the difference to a predetermined target value or target range (503), and
- in case the difference is not in a desired range, adjusting a fifth engine parameter (504).

14. A method according to claim 13, wherein the fifth engine parameter is different than the first engine parameter.

15. A piston engine (1) comprising means (15, 18) for determining cumulative heat release in a plurality of the cylinders (2) of the engine (1) during combustion and a control unit (14), wherein the control unit (14) is configured to operate the engine (1) in accordance with any of the preceding claims.

## Patentansprüche

1. Ein Verfahren zum Betreiben eines Kolbenmotors (1), wobei das Verfahren die folgenden Schritte umfasst
- Überwachen des Drucks in einer Vielzahl von Zylindern (2) des Motors (1) (101),
- Bestimmen auf der Grundlage der Überwachung des Zylinderdrucks (101) des Wertes einer ersten Variablen (CA₁, HR₁) die die Entwicklung der kumulativen Wärmeabgabe in einem einzelnen Zylinder (2) des Motors (1) während eines oder mehrerer Motorzyklen bis zu einem ersten Referenzpunkt (R₁) (102) darstellt,
- Vergleichen des Wertes der ersten Variablen (CA₁, HR₁) mit einem vorbestimmten ersten Zielwert oder Zielbereich, der die gewünschte Entwicklung der kumulativen Wärmeabgabe in dem einzelnen Zylinder (2) bis zu dem ersten Referenzpunkt (R₁) (103) darstellt,
- auf der Grundlage des Vergleichs, Einstellen eines ersten Motorparameters, wobei der erste Motorparameter ein zylinderspezifischer Parameter ist, der den Beginn der Verbrennung in dem einzelnen Zylinder (2) beeinflusst (104, 104a, 104b),
- gleichzeitig mit der Bestimmung des Wertes der ersten Variablen (CA₁, HR₁) , basierend auf der Überwachung des Zylinderdrucks (101), Bestimmen des Wertes einer zweiten Variablen (CA₂, HR₂), die die durchschnittliche Entwicklung der kumulativen Wärmeabgabe in einer Vielzahl von Zylindern (2) des Motors (1) während eines oder mehrerer Motorzyklen bis zu einem zweiten Referenzpunkt (R₂) darstellt, wobei der zweite Referenzpunkt (R₂) in einer späteren Phase der Verbrennung als der erste Referenzpunkt (R₁) liegt (202),
- Vergleichen des Wertes der zweiten Variablen (CA₂, HR₂) mit einem vorbestimmten zweiten Zielwert oder Zielbereich, der die gewünschte durchschnittliche Entwicklung der kumulativen Wärmeabgabe in der Vielzahl von Zylindern (2) bis zu dem zweiten Referenzpunkt (R₂) (203) darstellt, und
- auf der Grundlage des Vergleichs, Einstellen eines zweiten Motorparameters, der die Verbrennung in der Vielzahl von Zylindern (2) beeinflusst (204),
wobei der zweite Motorparameter der Druck der Ansaugluft ist.

2. Ein Verfahren nach Anspruch 1, wobei der erste Motorparameter der Zeitpunkt der Pilotkraftstoffeinspritzung, die Einspritzmenge des Pilotkraftstoffs, die Einlassventil- oder der Zündzeitpunkt ist.

3. Ein Verfahren nach Anspruch 1, wobei das Verfahren die folgenden Schritte umfasst
- Bestimmen der durchschnittlichen Einspritzmenge des Pilotkraftstoffs von mindestens drei früheren Motorzyklen (105),
- Vergleichen der durchschnittlichen Einspritzmenge mit einer vorgegebenen Obergrenze (106), und
- für den Fall, dass die durchschnittliche Einspritzmenge die Obergrenze nicht erreicht hat, Anpassen der Einspritzmenge des Pilotkraftstoffs als ersten Motorparameter (104a).

4. Ein Verfahren nach Anspruch 3, wobei für den Fall, dass die durchschnittliche Einspritzmenge den oberen Grenzwert erreicht hat, der Einspritzzeitpunkt des Pilotkraftstoffs und/oder die Zylinderkompressionstemperatur als erster Motorparameter (104b) eingestellt wird.

5. Ein Verfahren nach Anspruch 4, wobei die Verdichtungstemperatur durch Abgasrückführung und/oder durch Anpassung des Einlassventilschließzeitpunkts angepasst wird.

6. Ein Verfahren nach einem der vorhergehenden Ansprüche, wobei die erste Variable der Kurbelwinkel (CA₁) ist, bei dem eine vorbestimmte erste kumulative Menge an abgegebener Wärme erreicht wird, oder ein Wärmeabgabewert (HR₁), der die kumulative Wärmeabgabe bis zu einem ersten vorbestimmten Kurbelwinkel in dem einzelnen Zylinder (2) darstellt.

7. Ein Verfahren nach einem der vorhergehenden Ansprüche, wobei die zweite Variable der durchschnittliche Kurbelwinkel (CA₂) ist, bei dem eine vorbestimmte zweite kumulative Menge an abgegebener Wärme erreicht wird, oder ein Wärmeabgabewert (HR₂), der die durchschnittliche kumulative Wärmeabgabe bis zu einem zweiten vorbestimmten Kurbelwinkel darstellt.

8. Ein Verfahren nach einem der vorhergehenden Ansprüche, wobei die zweite Variable die durchschnittliche Entwicklung der kumulativen Wärmeabgabe während mehrerer Motorzyklen darstellt.

9. Ein Verfahren nach einem der vorhergehenden Ansprüche, wobei die erste Variable die Entwicklung der kumulativen Wärmeabgabe während eines einzelnen Motorzyklus darstellt.

10. Ein Verfahren nach Anspruch 9, wobei das Verfahren die folgenden Schritte umfasst
- Berechnen des Wertes einer dritten Variablen, die der Durchschnitt der Werte der ersten Variablen (CA₁, HR₁) von mindestens drei früheren Motorzyklen (302) ist,
- Vergleichen des Wertes der dritten Variablen mit einem vorbestimmten dritten Zielwert oder Zielbereich, der die gewünschte durchschnittliche Entwicklung der kumulativen Wärmeabgabe bis zu dem ersten Referenzpunkt (R₁) (303) darstellt, und
- auf der Grundlage des Vergleichs, Einstellen eines dritten Motorparameters, der sich von dem ersten Motorparameter (304) unterscheidet.

11. Ein Verfahren nach Anspruch 10, wobei sich der dritte Motorparameter von dem zweiten Motorparameter unterscheidet.

12. Ein Verfahren nach einem der vorhergehenden Ansprüche, wobei das Verfahren die folgenden Schritte umfasst
- Bestimmen des Durchschnittswertes der ersten Variablen (CA₁, HR₁) aller Zylinder (2) des Motors (1) (402),
- Vergleichen des Wertes der ersten Variablen (CA₁, HR₁) eines einzelnen Zylinders (2) des Motors (1) mit dem Durchschnittswert der ersten Variablen (403), und
- für den Fall, dass der Wert der ersten Variablen (CA₁, HR₁) des einzelnen Zylinders (2) nicht innerhalb vorbestimmter Grenzen von dem Durchschnittswert der ersten Variablen (CA₁, HR₁) liegt, Einstellen eines vierten Motorparameters, der sich von dem ersten Motorparameter (404) unterscheidet.

13. Ein Verfahren nach einem der vorhergehenden Ansprüche, wobei das Verfahren die folgenden Schritte umfasst
- Bestimmen der Differenz zwischen dem Wert der ersten Variablen (CA₁, HR₁) und dem Wert der zweiten Variablen (CA₂, HR₂) (502),
- Vergleichen der Differenz mit einem vorgegebenen Zielwert oder Zielbereich (503), und
- für den Fall, dass die Differenz nicht in einem gewünschten Bereich liegt, die Einstellung eines fünften Motorparameters (504).

14. Ein Verfahren nach Anspruch 13, wobei sich der fünfte Motorparameter von dem ersten Motorparameter unterscheidet.

15. Ein Kolbenmotor (1) mit einer Einrichtung (15, 18) zum Bestimmen der kumulativen Wärmeabgabe in einer Vielzahl von Zylindern (2) des Motors (1) während der Verbrennung und eine Steuereinheit (14), wobei die Steuereinheit (14) so konfiguriert ist, dass sie den Motor (1) nach einem der vorhergehenden Ansprüche betreibt.

## Revendications

1. Procédé de fonctionnement d'un moteur à piston (1), le procédé comprenant les étapes suivantes
- la surveillance de la pression dans une pluralité de cylindres (2) du moteur (1) (101),
- sur la base de la surveillance de la pression de cylindre (101), la détermination de la valeur d'une première variable (CA₁, HR₁), qui représente le développement de dégagement de chaleur cumulée dans un cylindre unique (2) du moteur (1) pendant un ou plusieurs cycles moteur jusqu'à un premier point de référence (R₁) (102),
- la comparaison de la valeur de la première variable (CA₁, HR₁) à une première valeur cible ou plage cible prédéterminée, qui représente le développement souhaité du dégagement de chaleur cumulée dans le cylindre unique (2) jusqu'au premier point de référence (R₁) (103),
- sur la base de la comparaison, le réglage d'un premier paramètre de moteur, dans lequel le premier paramètre de moteur est un paramètre spécifique au cylindre affectant le début de la combustion dans le cylindre unique (2) (104, 104a, 104b),
- simultanément à la détermination de la valeur de la première variable (CA₁, HR₁), sur la base de la surveillance de la pression de cylindre (101), la détermination de la valeur d'une deuxième variable (CA₂, HR₂), qui représente le développement moyen de dégagement de chaleur cumulée dans une pluralité de cylindres (2) du moteur (1) pendant un ou plusieurs cycles moteur jusqu'à un second point de référence (R₂), le second point de référence (R₂) étant situé à une phase de combustion ultérieure au premier point de référence (R₁) (202),
- la comparaison de la valeur de la deuxième variable (CA₂, HR₂) à une deuxième valeur cible ou plage cible prédéterminée, qui représente le développement moyen souhaité du dégagement de chaleur cumulée dans la pluralité de cylindres (2) jusqu'au second point de référence (R₂) (203), et
- sur la base de la comparaison, le réglage d'un deuxième paramètre de moteur, qui affecte la combustion dans la pluralité de cylindres (2) (204),
dans lequel le deuxième paramètre de moteur est la pression de l'air d'admission.

2. Procédé selon la revendication 1, dans lequel le premier paramètre de moteur est le calage de l'injection de carburant pilote, la quantité d'injection de carburant pilote, le calage de soupape d'admission ou le calage de l'étincelle.

3. Procédé selon la revendication 1, dans lequel le procédé comprend les étapes suivantes
- la détermination de la quantité d'injection moyenne de carburant pilote d'au moins trois cycles moteur antérieurs (105),
- la comparaison de la quantité d'injection moyenne à une limite supérieure prédéterminée (106), et
- dans le cas où la quantité d'injection moyenne n'a pas atteint la limite supérieure, le réglage de la quantité d'injection du carburant pilote en tant que premier paramètre de moteur (104a).

4. Procédé selon la revendication 3, dans lequel dans le cas où la quantité d'injection moyenne a atteint la limite supérieure, le calage d'injection du carburant pilote et/ou la température de compression de cylindre est réglé en tant que premier paramètre de moteur (104b).

5. Procédé selon la revendication 4, dans lequel la température de compression est réglée au moyen d'une recirculation des gaz d'échappement et/ou en réglant le calage de fermeture de soupape d'admission.

6. Procédé selon l'une quelconque des revendications précédentes, dans lequel la première variable est l'angle de vilebrequin (CA₁), auquel une première quantité cumulée prédéterminée de chaleur libérée est atteinte ou une valeur de dégagement de chaleur (HR₁) représentant le dégagement de chaleur cumulée jusqu'à un premier angle de vilebrequin prédéterminé dans le cylindre unique (2).

7. Procédé selon l'une quelconque des revendications précédentes, dans lequel la deuxième variable est l'angle de vilebrequin moyen (CA₂), auquel une seconde quantité cumulée prédéterminée de chaleur libérée est atteinte ou une valeur de dégagement de chaleur (HR₂) représentant le dégagement de chaleur cumulée moyen jusqu'à un second angle de vilebrequin prédéterminé.

8. Procédé selon l'une quelconque des revendications précédentes, dans lequel la deuxième variable représente le développement moyen de dégagement de chaleur cumulée pendant plusieurs cycles moteur.

9. Procédé selon l'une quelconque des revendications précédentes, dans lequel la première variable représente le développement de dégagement de chaleur cumulée au cours d'un cycle moteur unique.

10. Procédé selon la revendication 9, dans lequel le procédé comprend les étapes suivantes
- le calcul de la valeur d'une troisième variable, qui est la moyenne des valeurs des premières variables (CA₁, HR₁) d'au moins trois cycles moteur antérieurs (302),
- la comparaison de la valeur de la troisième variable à une troisième valeur cible ou plage cible prédéterminée, qui représente le développement moyen souhaité du dégagement de chaleur cumulée jusqu'au premier point de référence (R₁) (303), et
- sur la base de la comparaison, le réglage d'un troisième paramètre de moteur, qui est différent du premier paramètre de moteur (304).

11. Procédé selon la revendication 10, dans lequel le troisième paramètre de moteur est différent du deuxième paramètre de moteur.

12. Procédé selon l'une quelconque des revendications précédentes, dans lequel le procédé comprend les étapes suivantes
- la détermination de la valeur moyenne des premières variables (CA₁, HR₁) de tous les cylindres (2) du moteur (1) (402),
- la comparaison de la valeur de la première variable (CA₁, HR₁) d'un cylindre unique (2) du moteur (1) à la valeur moyenne des premières variables (403), et
- dans le cas où la valeur de la première variable (CA₁, HR₁) du cylindre unique (2) ne se situe pas dans des limites prédéterminées par rapport à la valeur moyenne des premières variables (CA₁, HR₁), le réglage d'un quatrième paramètre de moteur, qui est différent du premier paramètre de moteur (404).

13. Procédé selon l'une quelconque des revendications précédentes, dans lequel le procédé comprend les étapes suivantes
- la détermination de la différence entre la valeur de la première variable (CA₁, HR₁) et la valeur de la deuxième variable (CA₂, HR₂) (502),
- la comparaison de la différence à une valeur cible ou plage cible prédéterminée (503), et
- dans le cas où la différence ne se situe pas dans une plage souhaitée, le réglage d'un cinquième paramètre de moteur (504).

14. Procédé selon la revendication 13, dans lequel le cinquième paramètre de moteur est différent du premier paramètre de moteur.

15. Moteur à piston (1) comprenant des moyens (15, 18) pour déterminer le dégagement de chaleur cumulée dans une pluralité de cylindres (2) du moteur (1) pendant la combustion et une unité de commande (14), dans lequel l'unité de commande (14) est configuré pour faire fonctionner le moteur (1) selon l'une quelconque des revendications précédentes.
